# EUROPÄISCHE PATENTSCHRIFT

(11) **EP 3 869 644 B1**
(45) Veröffentlichungstag und Bekanntmachung des Hinweises auf die Patenterteilung: **24.08.2022**
(21) Anmeldenummer: 21157694.7
(22) Anmeldetag: 17.02.2021
(51) Int. Cl.: H01T 4/06, H01H 9/28, H02B 1/21, H01T 4/04, H02H 7/22, H02H 9/06

(54) **ÜBERSPANNUNGSSCHUTZGERÄT ZUR INSTALLATION AN EINEM SAMMELSCHIENENSYSTEM SOWIE BAUGRUPPE**
OVERVOLTAGE PROTECTION DEVICE FOR INSTALLATION ON A BUS BAR SYSTEM AND ASSEMBLY
APPAREIL DE PROTECTION CONTRE LES SURTENSIONS DESTINÉ À L'INSTALLATION SUR UN SYSTÈME DE BARRE OMNIBUS, AINSI QUE MODULE

(30) Priorität: 19.02.2020 DE 102020104412; 17.03.2020 DE 202020101558 U; 17.03.2020 DE 102020107331
(43) Veröffentlichungstag der Anmeldung: 25.08.2021
(73) Patentinhaber: DEHN SE, 92318 Neumarkt i.d. OPf. (DE)
(72) Erfinder: Hierl, Stephan, 92318 Neumarkt (DE); Brocke, Ralph, 92318 Neumarkt (DE); Krauss, Bernhard, 92318 Neumarkt (DE)
(74) Vertreter: Prinz & Partner mbB

(56) Entgegenhaltungen:
- DE-U- 7 207 930
- DE-U1-202018 006 111
- DE-U1-202019 102 722
- DE-U1-202019 103 321

## Beschreibung

Die Erfindung geht von einem Überspannungsschutzgerät zur Installation an einem Sammelschienensystem aus, aufweisend ein Gehäuse mit einem bodenseitigen Kupplungsbereich zum mechanischen und elektrischen Kontaktieren an Sammelschienen, Überspannungsableitern zum Schutz von Niederspannungsversorgungssystemen, welche innerhalb des Gehäuses elektrisch verschalten sind, sowie mit einem Gehäuserücksprung, welcher an einer Gehäuselängsseite ausgebildet ist und sich im Wesentlichen senkrecht zum Sammelschienensystem sowie im Bereich eines Gehäusedomes erstreckt, wobei im Gehäuserücksprung eine elektrische Komponente anordenbar ist.

Aus dem deutschen Gebrauchsmuster DE 20 2019 103 321 U1, oder aus DE 20 2018 006 111 U1, ist ein Überspannungsschutzgerät zur Installation an einem Sammelschienensystem bekannt. Gemäß der dortigen Lösung soll ein für eine Spannungsversorgung von Smart-Meter-Gateways notwendiger Spannungsabgriff in das Überspannungsschutzgerät integriert werden. Damit soll auf eine separate Komponente für die Spannungsversorgung verzichtet werden können, wodurch Platz im Vorzählerbereich eingespart wird.

Das vorbekannte Überspannungsschutzgerät weist ein Gehäuse auf, an dessen Rückseite ein Kupplungsbereich zur mechanischen und elektrischen Kontaktierung einer Sammelschiene angeordnet ist. Der Kupplungsbereich besitzt Kupplungsmittel, die in einem Rasterabstand eines Sammelschienensystems angeordnet sind und in an sich bekannter Weise eine unmittelbare Montage auf dem Sammelschienensystem zur mechanischen und elektrischen Verbindung mit den Leiterschienen ermöglichen.

Die Kupplungsmittel sind beispielsweise so ausgebildet, dass sie ein unmittelbares mechanisches Verrasten des Überspannungsschutzgerätes auf das Sammelschienensystem ermöglichen und dabei gleichzeitig eine elektrische Kontaktierung der Leiterschienen herstellen, wie es beispielsweise in der DE 20 2004 011 901 U1 offenbart ist.

Im Inneren des Gehäuses sind mehrere elektrisch verdrahtete Überspannungsableiter, insbesondere Funkenstrecken, befindlich. Das Überspannungsschutzgerät ist als Konfiguration eines Kombi-Ableiters mit mehreren integrierten und elektrisch verdrahteten Überspannungsableitern ausgebildet. Derartige Überspannungsableiter, zum Beispiel ausgebildet als Kombi-Ableiter für Hauptstromversorgungssysteme gehören zum Stand der Technik. Ableiter der vorstehend geschilderten Art werden unter dem Markennamen "DEHNventil ZP" vertrieben und sind speziell für ein Sammelschienenanschlussfeld eines Zählerplatzes ausgelegt.

Die DE 20 2019 103 321 U1 zeigt in einer Weiterbildung ein Überspannungsschutzgerät mit einer angrenzend angeordneten Einspeiseschiene, die in eine Aussparung des Gehäuses hineinragt, so dass der zur Verfügung stehende Raum zum Beispiel im Hausanschlussbereich optimal ausgenutzt werden kann. Grundsätzlich ist es so, dass Niederspannungsschutzkomponenten wie Leitungsschutzschalter, Schmelzsicherungen, Einspeiseeinrichtungen aber auch Überspannungsableiter sich einen beschränkten Bauraum in Anschlusskästen teilen müssen.

Da der Platz im Anschlussraum nicht größer wird, jedoch immer mehr Geräte im Niederspannungs-Installationsumfeld verbaut werden sollen und müssen, gestaltet sich die Montage und auch die Verdrahtung der erforderlichen Komponenten für den Installateur in der Praxis außerordentlich schwierig und zeitaufwändig.

Aus dem Vorgenannten ist es daher Aufgabe der Erfindung, ein weiterentwickeltes Überspannungsschutzgerät zur Installation an einem Sammelschienensystem anzugeben, welches so ausgebildet ist, dass zusätzliche notwendige elektrische Komponenten austauschbar in einem vom Überspannungsschutzgerät freigegebenen Bauraum angeordnet und somit quasi von außen zugänglich in das Überspannungsschutzgerät integriert werden können, wobei die Möglichkeit geschaffen werden soll, für den Anschluss und die Verdrahtung der zusätzlichen elektrischen Komponente auf vorhandene Mittel im Überspannungsableiter zurückzugreifen. Der zu schaffende Überspannungsableiter ist aber auch so zu ertüchtigen, dass der notwendige Berührungsschutz und der Schutz vor unzulässigen Manipulationen dann gewährleistet ist, wenn die Möglichkeit des Einsetzens einer zusätzlichen elektrischen Komponente nicht genutzt wird, jedoch zukünftig nutzbar bleiben soll.

Die Lösung der Aufgabe der Erfindung erfolgt mit einem weitergebildeten Überspannungsschutzgerät gemäß der Lehre des Anspruches 1, wobei die Unteransprüche mindestens zweckmäßige Ausgestaltungen und Weiterbildungen darstellen.

Ferner wird die Aufgabe erfindungsgemäß gelöst durch eine Baugruppe umfassend ein Überspannungsschutzgerät sowie eine Manipulationsschutz-Abdeckung und/oder eine Blindkomponente.

Es wird demnach von einem Überspannungsschutzgerät zur Installation an einem Sammelschienensystem ausgegangen, wobei das Überspannungsschutzgerät ein Gehäuse mit einem bodenseitigen Kupplungsbereich zum mechanischen und elektrischen Kontaktieren an Sammelschienen verfügt.

Im Gehäuse sind Überspannungsableiter zum Schutz von dem jeweiligen Niederspannungsversorgungssystem enthalten. Die einzelnen Überspannungsableiter sind in an sich bekannter Weise innerhalb des Gehäuses elektrisch verschalten. Das Gehäuse weist einen Gehäuserücksprung auf, welcher an einer Gehäuselängsseite ausgebildet ist und sich im Wesentlichen senkrecht zum Sammelschienensystem sowie im Bereich eines Gehäusedomes erstreckt.

Im Gehäuserücksprung ist eine elektrische Komponente anordenbar.

Der Gehäuserücksprung ist dabei so ausgeführt, dass die elektrische Komponente nun nicht nur teilweise in den Rücksprungbereich hinein taucht, sondern von Mitteln im Gehäuserücksprung fixierbar ist.

Im Gehäuse sind, dem Gehäusedom benachbart, und an den Gehäuserücksprung heranreichend, Anschlussklemmen ausgebildet, welche eine elektrische Kontaktierung der elektrischen Komponente ermöglichen. Dabei sind diese Anschlussklemmen von oben zugänglich, so dass nach dem Einsetzen der elektrischen Komponente in den Gehäuserücksprung in einfacher Weise die notwendige elektrische Verbindung zwischen der elektrischen Komponente und dem Überspannungsgerät herstellbar ist, das diesbezüglich schaltungstechnisch ausgestattet wird.

An der zum Gehäuserücksprung weisenden Seite des Gehäuses sind, von der Domoberseite zugängliche, das heißt offene, Nuten vorgesehen, um eine Manipulationsschutz-Abdeckung für die im Gehäuserücksprung angeordnete elektrische Komponente oder aber eine Blindkomponente, welche den Gehäuserücksprung ausfüllt, zu fixieren.

Die Manipulationsschutz-Abdeckung aber auch die Blindkomponente verfügen zu den Nuten komplementäre Schienen.

Dabei können diese Schienen im Querschnitt eine T-Form besitzen, so dass eine eindeutige Lagezuordnung gesichert und ein nicht korrektes Einsetzen der Blindkomponente bzw. der Manipulationsschutz-Abdeckung verhinderbar ist.

Weiterhin ist zwischen dem Gehäusedom und der Manipulationsschutz-Abdeckung oder der Blindkomponente eine Verrastung realisiert, beispielsweise mit Hilfe einer Rastnase, die in einem zugehörigen, komplementären Rastrücksprung eingreift.

Hierdurch ist die Manipulationsschutz-Abdeckung sicher gehalten.

Die erwähnten Anschlussklemmen für die einsetzbare elektrische Komponente sind bevorzugt als Schiebeklemmen mit Kontaktstück realisiert. Zu diesem Zweck ist im Gehäuse des Überspannungsschutzgerätes eine Langlochausnehmung vorhanden, um mit Hilfe eines Werkzeuges die Schiebeklemmen in Richtung einer diesbezüglichen Kontaktöffnung in der elektrischen Komponente zu bewegen.

Bei der Blindkomponente sind geschlossene, gegenüberliegende Schmalseiten vorhanden, um Fehlbedienungen der Schiebeklemmen zu verhindern. Mit anderen Worten ist es beim Einsetzen einer Blindkomponente nicht möglich, die Schiebeklemmen in Richtung Blindkomponente zu bewegen.

Die Schmalseiten der Blindkomponente weisen weiterhin über ihre Längserstreckung eine Profilierung auf, die zu einer komplementären Profilierung im Gehäuserücksprung passend ausgestaltet ist, so dass lediglich ein Einschieben der Blindkomponente von oben, nicht jedoch ein Kippen der Blindkomponente oder seitliches Herausdrücken dieser erfolgen kann.

Weiterhin können die Seitenwände der Blindkomponente jeweils nach unten sich erstreckende Verlängerungen aufweisen, die zungenartig in Öffnungen, das heißt schlitzförmige Aussparungen im Boden des Gehäuserücksprunges des Überspannungsableiters eintauchen. Auch dies führt zu einer verbesserten seitlichen Stabilisierung und zu einem erhöhten Manipulationsschutz.

Am Gehäusedom, an der Manipulationsschutz-Abdeckung und an der Blindkomponente ist eine Fläche zur Aufnahme einer Plombierung vorhanden. Diese Plombierungsfläche kann einen stegartigen Vorsprung umfassen, welcher eine Durchgangsbohrung zur Aufnahme eines Plombierdrahtes bzw. einer Plombierschnur zum Zweck des Verplombens besitzt.

Die Manipulationsschutz-Abdeckung weist eine Kappenform auf, wobei die Kappe an der dem Dom abgewandten Seite ausgestellt ist.

Diese Ausstellung der Kappe kann eine Kotflügel-Bogenform besitzen. Durch die Ausstellung der Seitenwand können elektrische Komponente umgriffen werden, die über eine größere Breite verfügen oder bei denen von oben zugängliche Betätigungsmechanismen, zum Beispiel in Form eines Betätigungshebels für einen Leitungsschalter, entsprechende Abmessungen aufweisen.

Es besteht darüber hinaus die Möglichkeit, dass zwischen der Ausstellung und der umgebenden Kappenwandung eine Perforation zum Heraus- oder Abtrennen vorgesehen ist. Hierdurch können auch nachträglich Leitungsschutzschalter mit entsprechend breiterem Bedienhebel eingesetzt werden.

Dadurch, dass die Manipulationsschutz-Abdeckung bevorzugt aus einem durchsichtigen oder durchscheinenden Kunststoffmaterial besteht, kann bei einer Installation im netzseitigen Anschlussraum jederzeit erkannt werden, in welchem Zustand sich die darunter befindliche elektrische Komponente befindet. Beispielsweise kann eine Schaltstellung eines Leitungsschalters erkannt werden, ohne dass, wie bisher üblich, undurchsichtige Abdeckstreifen im netzseitigen Anschlussraum oder eine gesamte diesbezügliche undurchsichtige Abdeckung entfernt werden muss.

Wie bereits erwähnt, ist die elektrische Komponente bevorzugt ein Leitungsschutzschalter mit Schaltbetätigungshebel, welcher in einer bekannten Bauform ausgeführt ist.

In weiterer Ausgestaltung weist der Boden des Gehäuserücksprunges eine hutschienenähnliche Struktur zur Aufnahme einer diesbezüglich ausgebildeten und geeigneten elektrischen Komponente auf. Der Vorteil dieser Ausgestaltung liegt insbesondere darin, dass quasi Standard-Leitungsschalter für Hutschienenmontage in den Gehäuserücksprung eingesetzt werden können.

Mit dem Einsetzen einer Blindkomponente in den Gehäuserücksprung wird nicht nur für ein geschlossenes Gesamterscheinungsbild des Überspannungsschutzgerätes gesorgt, sondern ein Berührungsschutz erreicht, auch in dem Falle, dass im netzseitigen Anschlussraum ein entsprechender Deckel eines Anschlusskastens entfernt wird. Es erhöht sich hierdurch die Sicherheit beim Hantieren und insbesondere bei Mess- und Prüfarbeiten unter Spannung.

Mit der Erfindung kann also der offene Bereich einer Abdeckung im netzseitigen Anschlussraum anstelle undurchsichtiger Abdeckstreifen durch eine bevorzugt durchsichtige Manipulationsschutz-Abdeckung verschlossen werden. Hierdurch ist die Möglichkeit geschaffen, den Schaltzustand einer unterhalb der Abdeckung befindlichen Komponente zu erkennen. Weiterhin kann die Abdeckung entfernt werden, ohne dass eine Öffnung des Korpus im netzseitigen Anschlussraum erforderlich ist. Durch die Variante mit Plombierung erhalten nur berechtigte Personen Zugang.

Die Blindkomponente ist insofern eine Abdeckung des erfindungsgemäß ausgebildeten Gehäuserücksprunges, die eine Nachrüstung einer elektrischen Komponente ermöglicht, aber auch bis zu diesem Zeitpunkt den notwendigen Berührungsschutz und die erforderliche Manipulationssicherheit gewährleistet.

Die Erfindung soll nachstehend anhand von Figuren und von Ausführungsbeispielen näher erläutert werden.

Hierbei zeigen:

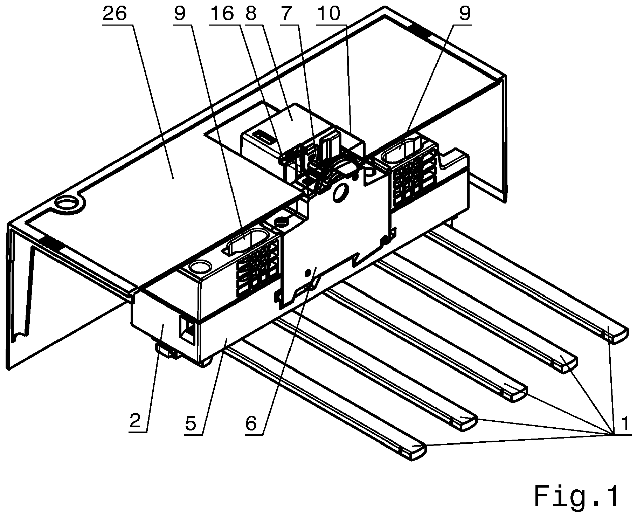

Fig. 1 eine perspektivische Darstellung mit Blick in einen netzseitigen Anschlussraum, dort erkennbaren Sammelschienensystem nebst auf den Sammelschienen aufgestecktem Überspannungsschutzgerät, welches einen Gehäuserücksprung aufweist, und wobei im Gehäuserücksprung ein Leitungsschalter eingesetzt ist sowie mit einer Manipulationsschutz-Abdeckung aus einem durchsichtigen Kunststoffmaterial;

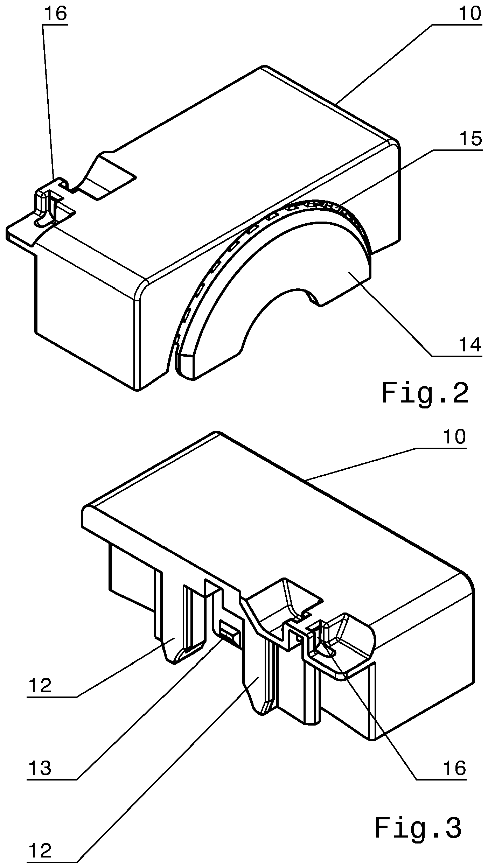

Fig. 2 und 3 verschiedene Ansichten der Manipulationsschutz-Abdeckung mit Plombiermöglichkeit, Ausstellung in Form eines Kotflügels sowie angedeuteter Verrastung und einer T-Nuten-Führung für eine exakte Positionierung der Abdeckung im Dombereich des Überspannungsschutzgerätes, wie in Fig. 1 erkennbar;

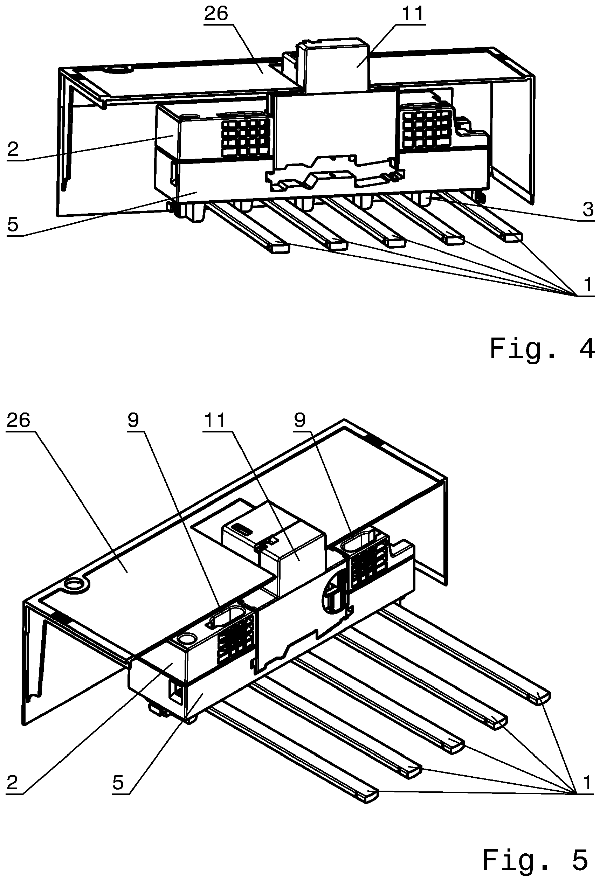

Fig. 4 eine Darstellung ähnlich derjenigen nach Fig. 1 mit Ansicht eines netzseitigen Anschlussraumes, Sammelschienensystem, Überspannungsschutzgerät und einer Blindkomponente, welche noch nicht vollständig in den Bereich des Gehäuserücksprunges eingesteckt ist, und wobei eine Schulter oder ein Absatz der Blindkomponente als Ziehschutz bei montierter Anschlussraumabdeckung dient sowie Zungen an der Blindkomponente, welche in den Boden des Gehäuserücksprunges des Überspannungsschutzgerätes eintauchen, um eine seitliche mechanische Stabilisierung zu bewirken;

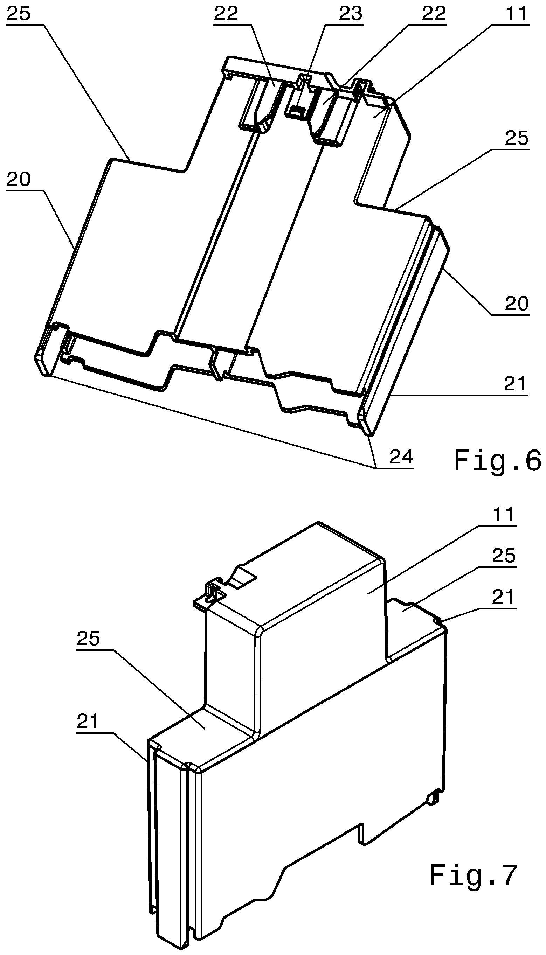

Fig. 5 eine Darstellung ähnlich derjenigen wie in Fig. 4, jedoch mit vollständig eingeschobener Blindkomponente, wobei im Bereich der weggebrochenen Detaildarstellung gezeigt ist, dass ohne Seitenwände in der Blindkomponente Fehlbedienungen durch Schiebeklemmen im Überspannungsschutzgerät möglich wären, was durch geschlossene Seitenwände, wie in den Fig. 6 und 7 ersichtlich, verhinderbar ist;
Fig. 6 und 7 verschiedene perspektivische Darstellungen der Blindkomponente mit T-Nuten-Führung, Verrastung, Ziehschutz-Schulter, Plombiermöglichkeit, Seitenwänden mit Strukturierung und den bereits erwähnten Zungen; und

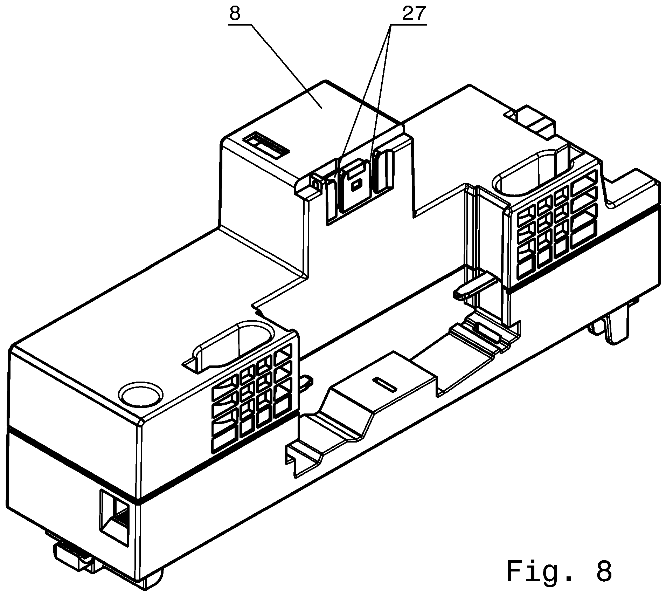

Fig. 8 eine perspektivische Darstellung des Überspannungsschutzgerätes mit von der Domoberseite zugänglichen Nuten zum Einschieben der Abdeckung oder Blindkomponente.

In den dargestellten Figuren wird von einem Überspannungsschutzgerät zur Installation an einem Sammelschienensystem ausgegangen, wobei das Sammelschienensystem aus den in den Figuren 1, 4 und 5 gezeigten mehreren, parallel in einem Rasterabstand verlaufenden Sammelschienen 1 besteht.

Das Überspannungsschutzgerät weist ein Gehäuse 2 mit einem bodenseitigen Kupplungsbereich 3 zum mechanischen und elektrischen Kontaktieren an den Sammelschienen 1 auf.

Im Inneren des Gehäuses befinden sich je nach Ausführungsform des Überspannungsschutzgerätes mehrere Überspannungsableiter zum Schutz von Niederspannungsversorgungssystemen. Diese Überspannungsableiter sind innerhalb des Gehäuses 2 elektrisch verschalten.

Weiterhin ist ein Gehäuserücksprung 4 vorhanden, welcher an einer Gehäuselängsseite 5 ausgebildet ist und sich im Wesentlichen senkrecht zum Sammelschienensystem 1 erstreckt.

Im Gehäuserücksprung ist eine elektrische Komponente anordenbar. Beim gezeigten Beispiel nach Figur 1 handelt es sich hier um einen Leistungsschutzschalter 6 mit einem Schaltbetätigungshebel 7.

Der Gehäuserücksprung 4 erstreckt sich bis in den Bereich eines Gehäusedomes 8.

Im Gehäuse 2, dem Gehäusedom 8 benachbart und an den Gehäuserücksprung 4 heranreichend sind Anschlussklemmen ausgebildet, die sich im Bereich der Langlochausnehmungen 9 befinden.

Diese Anschlussklemmen ermöglichen eine elektrische Kontaktierung der elektrischen Komponente, zum Beispiel des dargestellten Leitungsschutzschalters 6.

An der zum Gehäuserücksprung 4 weisenden Seite des Gehäuses 2 sind von der Oberseite des Gehäusedomes 8 zugängliche Nuten 27 (siehe Figur 8) vorgesehen, um eine Manipulationsschutz-Abdeckung 10 für die im Gehäuserücksprung 4 angeordnete elektrische Komponente 6 oder aber auch eine Blindkomponente 11 (Figur 4 bis 7), wobei letztere den Gehäuserücksprung 4 ausfüllt, zu fixieren.

Das Überspannungsschutzgerät bildet zusammen mit der Blindkomponente 11 bzw. der Manipulationsschutz-Abdeckung 10 eine Baugruppe aus.

Wie vorstehend und nachfolgend detailliert beschrieben, kann am Überspannungsschutzgerät die Manipulationsschutz-Abdeckung 10 oder die Blindkomponente 11 angeordnet sein.

Insofern stellt das Überspannungsschutzgerät, die Manipulationsschutz-Abdeckung 10 und die Blindkomponente 11 ein Baukastensystem dar, wobei je nach Anwendung die Manipulationsschutz-Abdeckung 10 oder die Blindkomponente 11 am Überspannungsschutzgerät vorgesehen ist.

Wie aus den Darstellungen nach den Figuren 2 und 3 ersichtlich, ist die Manipulationsschutz-Abdeckung 10 kappenförmig und aus einem transparenten oder durchscheinenden Material ausgeführt. An der zum Gehäusedom 8 weisenden Seite sind zu den Nuten 27 im Dom komplementäre Schienen 12 vorgesehen.

Die Schienen können im Querschnitt eine T-Form besitzen.

Weiterhin ist zwischen dem Gehäusedom 8 und der Manipulationsschutz-Abdeckung 10 oder aber auch der Blindkomponente eine Verrastung 13 in Form einer Rastnase mit zugeordnetem Rastrücksprung ausgebildet.

Die Manipulationsschutz-Abdeckung 10 weist an der, den Schienen 12 gegenüberliegenden Seite, das heißt der domabgewandten Seite eine Ausbauchung oder Ausstellung in Form eines Kotflügels in Bogengestalt auf.

Zwischen dieser Ausstellung 14 in Form eines Kotflügels und der umgebenden Kappenwandung kann eine Perforation 15 befindlich sein, um ein Heraus- oder Abtrennen der Ausstellung zu ermöglichen, so dass auch elektronische Komponenten mit größerer Abmessung, insbesondere auch Leitungsschutzschalter 6 mit größeren, insbesondere breiteren Schaltbetätigungshebel, in den Gehäuserücksprung 4 einsetzbar sind.

Zusätzlich besteht die Möglichkeit, sowohl am Gehäusedom 8 aber auch an der Manipulationsschutz-Abdeckung 10 oder der Blindkomponente 11 Mittel oder Flächen 16 zur Aufnahme einer Plombierung auszubilden.

Mit Hilfe der Figuren 4 bis 7 ist illustriert, wie eine Blindkomponente 11 in den Gehäuserücksprung 4 des Überspannungsschutzgerätes eingesetzt werden kann.

Die geometrische Form dieser Blindkomponente ist dem Erscheinungsbild eines typischen Leitungsschutzschalters oder einer entsprechenden Sicherung nachempfunden, jedoch bevorzugt farblich diesbezüglich unterschiedlich, so dass eine Erkennung als Dummy sichergestellt ist.

Die Blindkomponente 11 weist geschlossene, gegenüberliegende Schmalseiten 20 auf, die ein Eindringen einer Schneidklemme verhindern, wie dies bei entsprechend nicht geschlossener Ausführung der Seitenwand in Figur 5 dargestellt ist.

Die Schmalseiten 20 weisen über ihre Längserstreckung eine Profilierung 21 auf, die zu einer Profilierung in der diesbezüglichen Aussparungsfläche im Überspannungsableiter, das heißt im Bereich des Gehäuserücksprunges 4, komplementär ist, so dass lediglich ein Einschieben von oben in den Gehäuserücksprung nicht jedoch ein Herauskippen oder seitliches Herausdrücken der Blindkomponente 11 erfolgen kann.

Auch an der Blindkomponente 11 befinden sich Schienen 22 sowie eine Rastnase 23, um die Blindkomponente 11 am Dom 8 und dort vorgesehenen komplementären Rücksprüngen bzw. Ausnehmungen sicher zu fixieren. Ebenso besitzt die Blindkomponente 11 Mittel 16 zum Plombieren.

Zungenartige Fortsätze 24 am unteren Ende der Blindkomponente 11 tauchen in zugehörige Ausnehmungen im Bodenbereich der Aussparung, das heißt im Gehäuserücksprung 4, ein mit dem Ergebnis einer verbesserten seitlichen mechanischen Stabilisierung.

Der Boden des Gehäusesrücksprunges 4 besitzt eine hutschienenähnliche Struktur bzw. eine dementsprechend strukturierende Oberfläche zur Aufnahme einer diesbezüglich angepasst ausgeführten elektronischen Komponente. Aber auch die Blindkomponente kann dementsprechend strukturiert sein, so dass sich ein sicherer Halt der Blindkomponente 11 im Gehäuserücksprung 4 ergibt, wenn die Abfolge der Figuren 4 und 5 betrachtet wird.

Schultern 25 an der Blindkomponente 11 dienend ergänzend als Ziehschutz bei montierter Abdeckung 26 im netzseitigen Anschlussraum.

Durch die transparente Ausbildung der Manipulationsschutz-Abdeckung 10 ist die Stellung eines Betätigungshebels eines eingesetzten Leitungsschutzschalters jederzeit erkennbar.

Die Manipulationsschutz-Abdeckung 10 kann auch bei vorhandener Abdeckung 26 entfernt und wieder aufgesetzt werden, so dass weitere diesbezügliche Demontagearbeiten nicht erforderlich werden.

Wie aus den Figuren 2 und 3 sowie 6 ersichtlich ist, können die Schienen 12 beabstandet paarweise realisiert werden und über eine Einführschräge verfügen, so dass eine exakte Positionierung und ein leichtes Aufstecken möglich ist.

Bei den gezeigten Darstellungen schließt entweder die elektrische Komponente flächenbündig mit der diesbezüglichen Längsseitenoberfläche des Überspannungsschutzgerätes oder aber auch die Blindkomponente entsprechend flächenbündig ab. Benachbarte Geräte, zum Beispiel ein Hauptsicherungsschalter, können diesbezüglich dicht herangeführt werden. Wenn neben der erläuterten Anordnung kein weiteres Gerät installiert ist und ein Freiraum besteht, bildet die Ausstellung 14 in Kotflügel-Bogenform ergänzend Berührungssicherheit und einen weitergehenden Manipulationsschutz.

## Patentansprüche

1. Überspannungsschutzgerät zur Installation an einem Sammelschienensystem, aufweisend ein Gehäuse (2) mit einem bodenseitigen Kupplungsbereich (3) zum mechanischen und elektrischen Kontaktieren an Sammelschienen (1), Überspannungsableitern zum Schutz von Niederspannungsversorgungssystemen, welche innerhalb des Gehäuses (2) elektrisch verschalten sind, sowie mit einem Gehäuserücksprung (4), welcher an einer Gehäuselängsseite (5) ausgebildet ist und sich im Wesentlichen senkrecht zum Sammelschienensystem sowie im Bereich eines Gehäusedomes (8) erstreckt, wobei im Gehäuserücksprung (4) eine elektrische Komponente anordenbar ist, **dadurch gekennzeichnet, dass** im Gehäuse (2), dem Gehäusedom benachbart und an den Gehäuserücksprung (4) heranreichend, Anschlussklemmen ausgebildet sind, welche eine elektrische Kontaktierung der elektrischen Komponente (6) ermöglichen, wobei an der zum Gehäuserücksprung (4) weisenden Seite des Gehäusedomes (8), von der Domoberseite zugängliche Nuten (27) vorgesehen sind, um eine Manipulationsschutz-Abdeckung (10) für eine im Gehäuserücksprung 4 anordenbare elektrische Komponente (6) oder eine Blindkomponente (11), welche den Gehäuserücksprung (4) ausfüllt, zu fixieren.

2. Überspannungsschutzgerät nach Anspruch 1, **dadurch gekennzeichnet, dass** die Anschlussklemmen als Schiebeklemmen mit Kontaktstück ausgebildet sind.

3. Überspannungsschutzgerät nach einem der vorangegangenen Ansprüche, **dadurch gekennzeichnet, dass** am Gehäusedom (8) eine Fläche (16) zur Aufnahme einer Plombierung vorhanden ist.

4. Überspannungsschutzgerät nach einem der vorangegangenen Ansprüche, **dadurch gekennzeichnet, dass** der Boden des Gehäuserücksprunges (4) eine hutschienenähnliche Struktur zur Aufnahme einer diesbezüglich ausgeführten, zur Hutschienenaufnahme geeigneten, elektrischen Komponente aufweist.

5. Baugruppe umfassend ein Überspannungsschutzgerät nach einem der vorangegangenen Ansprüche, wobei die Baugruppe eine Manipulationsschutz-Abdeckung (10) und/oder eine Blindkomponente (11) aufweist.

6. Baugruppe nach Anspruch 5, **dadurch gekennzeichnet, dass** zwischen dem Gehäusedom (8) und der Manipulationsschutz-Abdeckung (10) oder der Blindkomponente (11) eine Verrastung (13) mittels Rastnase und Rastrücksprung ausgebildet ist.

7. Baugruppe nach Anspruch 5 oder 6, **dadurch gekennzeichnet, dass** an der Manipulationsschutz-Abdeckung (10) bzw. der Blindkomponente (11) zu den Nuten (27) komplementäre Schienen (12) vorgesehen sind, insbesondere wobei die Schienen (12) eine im Querschnitt T-Form besitzen.

8. Baugruppe nach einem der Ansprüche 5 bis 7, **dadurch gekennzeichnet, dass** die Anschlussklemmen des Überspannungsschutzgeräts als Schiebeklemmen mit Kontaktstück ausgebildet sind, wobei die Blindkomponente (11) geschlossene gegenüberliegende Schmalseiten (20) aufweist, um Fehlbedienungen der Schiebeklemmen zu verhindern, insbesondere wobei die Schmalseiten (20) über ihre Längserstreckung eine Profilierung (21) aufweisen, die zu einer Profilierung oder Strukturierung im Gehäuserücksprung (4) komplementär ist, so dass lediglich ein Einschieben, nicht jedoch ein Kippen der Blindkomponente (11) erfolgen kann.

9. Baugruppe nach einem der Ansprüche 5 bis 8, **dadurch gekennzeichnet, dass** die Manipulationsschutz-Abdeckung (10) eine Kappenform besitzt, wobei die Kappe an der domabgewandten Seite ausgestellt ist.

10. Baugruppe nach Anspruch 9, **dadurch gekennzeichnet, dass** die Ausstellung (14) der Kappe eine Kotflügel-Bogenform besitzt.

11. Baugruppe nach Anspruch 10, **dadurch gekennzeichnet, dass** zwischen der Ausstellung (14) und der umgebenden Kappenwandung eine Perforation (15) zum Heraus- oder Abtrennen vorgesehen ist.

12. Baugruppe nach einem der Ansprüche 5 bis 11, **dadurch gekennzeichnet, dass** die Manipulationsschutz-Abdeckung (10) aus einem durchsichtigen oder durchscheinenden Kunststoffmaterial besteht.

13. Baugruppe nach einem der Ansprüche 5 bis 12, **dadurch gekennzeichnet, dass** die elektrische Komponente ein Leitungsschutzschalter (6) mit Schaltbetätigungshebel (7) ist.

14. Baugruppe nach Anspruch 12 und 13, **dadurch gekennzeichnet, dass** die Position des Schaltbetätigungshebels (7) bei aufgesetzter Manipulationsschutz-Abdeckung (10) erkennbar bleibt.

15. Baugruppe nach einem der Ansprüche 5 bis 14, **dadurch gekennzeichnet, dass** an der Manipulationsschutz-Abdeckung (10) bzw. an der Blindkomponente (11) eine Fläche (16) zur Aufnahme einer Plombierung vorhanden ist.

## Claims

1. A surge protection device for installation on a busbar system, including a housing (2) having a bottom-side coupling region (3) for mechanical and electrical contacting to busbars (1), surge arresters for protecting low-voltage supply systems, which are electrically connected inside the housing (2), and a housing recess (4) which is formed on a housing longitudinal side (5) and extends substantially perpendicularly to the busbar system and in the region of a housing dome (8), wherein an electrical component can be arranged in the housing recess (4), **characterized in that** connecting terminals are formed within the housing (2), adjacent to the housing dome and reaching as far as the housing recess (4), which allow an electrical contacting of the electrical component (6), wherein grooves (27) that are accessible from the upper side of the dome are provided on the side of the housing dome (8) facing the housing recess (4), in order to fix a tamper protection cover (10) for an electrical component (6) which can be arranged in the housing recess (4) or a reactive component (11) which fills the housing recess (4).

2. The surge protection device according to claim 1, **characterized in that** the connecting terminals are in the form of sliding terminals with a contact piece.

3. The surge protection device according to either of the preceding claims, **characterized in that** a surface (16) for receiving a sealing is provided on the housing dome (8).

4. The surge protection device according to any of the preceding claims, **characterized in that** the bottom of the housing recess (4) has a structure similar to a DIN rail for receiving an electrical component that has a matching design and is suitable for DIN rail mounting.

5. An assembly comprising a surge protection device according to any of the preceding claims, wherein the assembly includes a tamper protection cover (10) and/or a reactive component (11).

6. The assembly according to claim 5, **characterized in that** a latch mechanism (13) is formed by means of a latching lug and a latching recess between the housing dome (8) and the tamper protection cover (10) or the reactive component (11).

7. The assembly according to claim 5 or 6, **characterized in that** rails (12) that are complementary to the grooves (27) are provided on the tamper protection cover (10) or the reactive component (11), in particular wherein the rails (12) have a T-shape in cross-section.

8. The assembly according to any of claims 5 to 7, **characterized in that** the connecting terminals of the surge protection device are formed as sliding terminals with a contact piece, wherein the reactive component (11) has closed opposing narrow sides (20) in order to prevent incorrect operation of the sliding terminals, in particular wherein the narrow sides (20) have a profiling (21) over their longitudinal extent, which is complementary to a profiling or structuring in the housing recess (4), so that only an insertion, but not a tilting of the reactive component (11) can be performed.

9. The assembly according to any of claims 5 to 8, **characterized in that** the tamper protection cover (10) has a cap shape, the cap having a protrusion on the side facing away from the dome.

10. The assembly according to claim 9, **characterized in that** the protrusion (14) of the cap has a fender arch shape.

11. The assembly according to claim 10, **characterized in that** a perforation (15) is provided between the protrusion (14) and the surrounding cap wall for detaching or separating.

12. The assembly according to any of claims 5 to 11, **characterized in that** the tamper protection cover (10) is made from a transparent or translucent plastic material.

13. The assembly according to any of claims 5 to 12, **characterized in that** the electrical component is a circuit breaker (6) with a switching operating lever (7).

14. The assembly according to claims 12 and 13, **characterized in that** the position of the switching operating lever (7) remains visible when the tamper protection cover (10) has been put into place.

15. The assembly according to any of claims 5 to 14, **characterized in that** a surface (16) for receiving a sealing is provided on the tamper protection cover (10) and/or on the reactive component (11).

## Revendications

1. Appareil de protection contre les surtensions pour l'installation sur un système de barres omnibus, comprenant un boîtier (2) qui présente une zone de couplage (3) côté fond pour la mise en contact mécanique et électrique avec des barres omnibus (1), des parasurtenseurs pour la protection de systèmes d'alimentation basse tension, qui sont connectés électriquement à l'intérieur du boîtier (2), ainsi qu'un retrait de boîtier (4) réalisé sur un grand côté de boîtier (5) et s'étendant sensiblement perpendiculairement au système de barres omnibus ainsi que dans la zone d'un dôme de boîtier (8), un composant électrique étant apte à être agencé dans le retrait de boîtier (4), **caractérisé en ce que** des bornes de raccordement sont réalisées dans le boîtier (2) au voisinage du dôme de boîtier en atteignant le retrait de boîtier (4), lesquelles permettent une mise en contact électrique du composant électrique (6), des rainures (27) accessibles depuis la face supérieure du dôme étant prévues sur la face du dôme de boîtier (8) tournée vers le retrait de boîtier (4) pour fixer un couvercle de protection contre les manipulations (10) pour un composant électrique (6) apte à être agencé dans le retrait de boîtier (4) ou un faux composant (11) qui remplit le retrait de boîtier (4).

2. Appareil de protection contre les surtensions selon la revendication 1, **caractérisé en ce que** les bornes de raccordement sont réalisées sous forme de bornes coulissantes présentant une pièce de contact.

3. Appareil de protection contre les surtensions selon l'une des revendications précédentes, **caractérisé en ce qu'**une surface (16) pour la réception d'un plombage est présente sur le dôme de boîtier (8).

4. Appareil de protection contre les surtensions selon l'une des revendications précédentes, **caractérisé en ce que** le fond du retrait de boîtier (4) présente une structure semblable à un rail DIN pour la réception d'un composant électrique réalisé de manière correspondante et adapté à un logement de rail DIN.

5. Ensemble comprenant un dispositif de protection contre les surtensions selon l'une des revendications précédentes, l'ensemble présentant un couvercle de protection contre les manipulations (10) et/ou un faux composant (11).

6. Ensemble selon la revendication 5, **caractérisé en ce qu'**un mécanisme d'enclenchement (13) par ergot d'enclenchement et retrait d'enclenchement est réalisé entre le dôme de boîtier (8) et le couvercle de protection contre les manipulations (10) ou le faux composant (11).

7. Ensemble selon la revendication 5 ou 6, **caractérisé en ce que** des rails (12) complémentaires aux rainures (27) sont prévus sur le couvercle de protection contre les manipulations (10) ou sur le faux composant (11), les rails (12) présentant en particulier une section transversale en forme de T.

8. Ensemble selon l'une des revendications 5 à 7, **caractérisé en ce que** les bornes de raccordement de l'appareil de protection contre les surtensions sont réalisées sous forme de bornes coulissantes présentant une pièce de contact, le faux composant (11) présentant des côtés étroits (20) fermés et opposés afin d'éviter des erreurs de manipulation des bornes coulissantes, les côtés étroits (20) présentant en particulier sur leur extension longitudinale un profilage (21) qui est complémentaire à un profilage ou une structuration dans le retrait de boîtier (4), de sorte que seule une insertion peut avoir lieu, mais pas un basculement du faux composant (11).

9. Ensemble selon l'une des revendications 5 à 8, **caractérisé en ce que** le couvercle de protection contre les manipulations (10) présente une forme de capuchon, le capuchon étant en saillie du côté détourné du dôme.

10. Ensemble selon la revendication 9, **caractérisé en ce que** la saillie (14) du capuchon présente une forme arquée en aile.

11. Ensemble selon la revendication 10, **caractérisé en ce qu'**une perforation (15) est prévue entre la saillie (14) et la paroi de capuchon qui l'entoure pour permettre le retrait ou le détachement.

12. Ensemble selon l'une des revendications 5 à 11, **caractérisé en ce que** le couvercle de protection contre les manipulations (10) est réalisé en une matière plastique transparente ou translucide.

13. Ensemble selon l'une des revendications 5 à 12, **caractérisé en ce que** le composant électrique est un disjoncteur de protection de circuit (6) présentant un levier de commande de commutation (7).

14. Ensemble selon les revendications 12 et 13, **caractérisé en ce que** la position du levier de commande de commutation (7) reste reconnaissable lorsque le couvercle de protection contre les manipulations (10) est en place.

15. Ensemble selon l'une des revendications 5 à 14, **caractérisé en ce qu'**une surface (16) pour la réception d'un plombage est présente sur le couvercle de protection contre les manipulations (10) ou sur le faux composant (11).
